# EUROPÄISCHE PATENTSCHRIFT

(11) **EP 0 911 553 B1**
(45) Veröffentlichungstag und Bekanntmachung des Hinweises auf die Patenterteilung: **19.03.2003**
(21) Anmeldenummer: 98119374.1
(22) Anmeldetag: 14.10.1998
(51) Int. Cl.: F16H 63/44, B60K 41/22, F16H 59/46, F16H 59/56

(54) **Getriebesteuerung und Steuerverfahren für ein Lastschaltgetriebe**
Control device and method for a powershift transmission
Dispositif et procédé de commande pour boîte de vitesses à passage sous couple

(30) Priorität: 25.10.1997 DE 19747262
(43) Veröffentlichungstag der Anmeldung: 28.04.1999
(73) Patentinhaber: DEERE & COMPANY, Moline, Illinois 61265-8098 (US)
(72) Erfinder: Kempf, Tilo, 68199 Mannheim (DE); Hollstein, Jürgen, 68259 Mannheim (DE)
(74) Vertreter: Lau-Loskill, Philipp, Dipl.-Phys.

(56) Entgegenhaltungen:
- EP-A- 0 547 829
- EP-A- 0 595 496
- US-A- 4 324 153
- US-A- 4 722 248
- US-A- 5 109 730

## Beschreibung

Die Erfindung betrifft eine Getriebesteuerung sowie ein Steuerverfahren für ein Lastschaltgetriebe. Das Lastschaltgetriebe ist Teil des Antriebsstranges eines Arbeitsfahrzeugs, insbesondere eines Ackerschleppers. Der Antriebsstrang enthält wenigstens einen Antriebsmotor, das durch eine Verstelleinrichtung einstellbare Lastschaltgetriebe, eine Fahrkupplung, ein über einen Schalthebel schaltbares Synchronschaltgetriebe und angetriebene Fahrzeugräder.

Es sind Ackerschlepper im Handel (beispielsweise John Deere Traktoren der 6000-er Serien), deren Antriebsstrang insbesondere einen Verbrennungsmotor, ein Gangschaltgetriebe, eine Reversiereinheit, eine Fahrkupplung, ein Kriechganggetriebe (optional), ein Gruppenschaltgetriebe, ein Hinterachsdifferential und die angetriebenen Hinterräder aufweist. Das Gangschaltgetriebe ist als Lastschaltgetriebe, auch Teillastschaltgetriebe genannt, ausgebildet, welches Planetensätze mit Kupplungen und Bremsen enthält, die eine Umschaltung der Gänge unter Last ermöglichen. Zur Einstellung der Gänge werden durch einen Gangschalthebel Steuersignale an eine Steuereinheit zur Einstellung einer Verstelleinrichtung abgegeben, welche auf das Lastschaltgetriebe einwirkt und die Umschaltprozesse steuert. Bei dem Gruppenschaltgetriebe handelt es sich um ein vollsynchronisiertes Schaltgetriebe, dessen Gruppen durch einen Gruppenschalthebel einstellbar sind. Für die Umschaltung der Reversiereinheit zwischen Vorwärts und Rückwärts dient ein Fahrtrichtungshebel. Dieser bekannte Antriebsstrang weist eine feine, praxisgerechte Gangabstufung auf und bietet die Möglichkeit innerhalb einer gewählten Gruppe eine Umschaltung der Gänge unter Last vorzunehmen. Um die feine Gangabstufung nutzen zu können, muß die Bedienungsperson bei einer Umschaltung des Gruppengetriebes für viele Gangkombinationen auch den Gang des Lastschaltgetriebes anpassen, so daß zwei Schalthebel zu betätigen sind.

Die US 5 109 730 A zeigt die Merkmale des Oberbegriffs des Anspruchs 1 oder 1.

Die der Erfindung zugrunde liegende Aufgabe wird darin gesehen, eine Getriebesteuerung sowie ein Verfahren zur Getriebesteuerung für das Lastschaltgetriebe eines Antriebsstrangs der eingangs genannten Art anzugeben, die bzw. das eine weitere Steigerung des Schaltkomforts mit sich bringt.

Die Aufgabe wird erfindungsgemäß durch die Lehre der Patentansprüche 1 und 11 gelöst. Weitere vorteilhafte Ausgestaltungen und Weiterbildungen der Erfindung gehen aus den Unteransprüchen hervor.

Die erfindungsgemäße Getriebesteuerung bzw. das erfindungsgemäße Steuerungsverfahren ist für ein Lastschaltgetriebe vorgesehen, das im Antriebsstrang eines Arbeitsfahrzeugs, insbesondere eines Ackerschleppers, enthalten ist. Der Antriebsstrang enthält wenigstens folgende Komponenten: einen Antriebsmotor, ein durch eine Verstelleinrichtung einstellbares Lastschaltgetriebe, eine Fahrkupplung, ein über einen Schalthebel schaltbares Synchronschaltgetriebe und angetriebene Fahrzeugräder. Durch das Lastschaltgetriebe lassen sich die Gänge unter Last schalten. Das Synchronschaltgetriebe ist vorzugsweise als Gruppenschaltgetriebe ausgebildet. Es versteht sich, daß in dem Antriebsstrang auch weitere Komponenten enthalten sein können, wie beispielsweise eine Fahrtrichtungsumkehreinheit - auch Reversiereinheit genannt -, ein Kriechganggetriebe, ein Vierradgetriebe, ein Differentialgetriebe und Endantriebsuntersetzungsgetriebe. Bezüglich der Erfindung muß die Reihenfolge der Komponenten des Antriebsstrangs nicht mit der oben angegebenen übereinstimmen. Beispielsweise kann die Fahrkupplung auch unmittelbar hinter dem Antriebsmotor liegen.

Die Getriebesteuerung enthält einen Kupplungssensor, der feststellt, ob die Fahrkupplung geöffnet oder geschlossen ist, wenigstens zwei Drehzahlsensoren zur Erfassung von Drehzahlen beidseits der Fahrkupplung und eine elektronische Steuereinheit.

Wesentlicher Gesichtspunkt der vorliegenden Erfindung ist es, daß während eines Gangwechsels des Synchronschaltgetriebes der Gang des Lastschaltgetriebes automatisch angepaßt wird. Hierbei wird ein Gang des Lastschaltgetriebes ausgewählt und automatisch eingestellt, bei dem die Drehzahlen beidseits der Fahrkupplung möglichst wenig differieren. Der Fahrer wird durch diese Maßnahme entlastet, da er bei einer Getriebeumschaltung, die einen Gangwechsel des Synchronschaltgetriebes erfordert, nur die Fahrkupplung ausrücken und den Schalthebel des Synchron-schaltgetriebes bedienen muß. Eine geeignete Anpassung des Lastschaltgetriebes erfolgt dann automatisch.

Erfindungsgemäß enthält die Steuereinheit der Getriebesteuerung Mittel zur Auswertung der Signale des Kupplungssensors und zur Feststellung des Schaltzustandes der Fahrkupplung, Mittel zur Auswertung der Signale der Drehzahlsensoren und zur Bestimmung von aktuellen, gemessenen Drehzahlunterschieden zwischen der Eingangswelle und der Ausgangswelle der Fahrkupplung für den momentan eingestellten Gang und für andere einstellbare Übersetzungsverhältnisse des Lastschaltgetriebes, Mittel zur Auswahl des Ganges des Lastschaltgetriebes, für den sich möglichst geringe Drehzahlunterschiede ergeben, und Mittel zur Abgabe von Steuersignalen an die Verstelleinrichtung des Lastschaltgetriebes zur automatischen Einstellung des ausgewählten Ganges, sofern die Fahrkupplung offen ist.

Dementsprechend weist das erfindungsgemäße Verfahren folgende Schritte auf: Feststellung des Schaltzustandes der Fahrkupplung mittels eines Kupplungssensors, Auswertung der Signale der Drehzahlsensoren, um aktuelle Drehzahlunterschiede zwischen der Eingangswelle und der Ausgangswelle der Fahrkupplung für die einstellbaren Übersetzungsverhältnisse des Lastschaltgetriebes zu ermitteln, Auswahl des Ganges des Lastschaltgetriebes, für den sich möglichst geringe Drehzahlunterschiede ergeben, und Ansteuerung der Verstelleinrichtung des Lastschaltgetriebes zur Beibehaltung bzw. zur automatischen Einstellung des ausgewählten Ganges, sofern die Fahrkupplung offen ist. Es ist nicht notwendig, daß die Verfahrsschritte in der angegebenen Reihenfolge ausgeführt werden. Es ist beispielsweise vorteilhaft, daß zunächst der Zustand der Fahrkupplung überprüft wird und die weiteren Verfahrensschritte nur dann ausgeführt werden, wenn die Fahrkupplung offen ist. Das erfindungsgemäße Verfahren kann durch einen Anpassungs-Algorithmus in einer elektronischen Steuereinheit ausgeführt werden. Dieser Anpassungs-Algorithmus wird insbesondere dann aktiv, wenn die Fahrkupplung geöffnet wird, um einen neuen Gang bzw. eine Gruppe des Synchronschaltgetriebes einzustellen.

Durch Anwendung des erfindungsgemäßen Anpassungs-Algorithmus läßt sich bei einem Gangwechsel des Synchronschaltgetriebes die resultierende Änderung des Gesamtübersetzungsverhältnisses beider Getriebe gering halten. Dadurch wird ein schnelles, weiches Wiedereinkuppeln begünstigt. Darüber hinaus wird der Fahrer beim Gangwechsel entlastet, denn selbst bei relativ großen Übersetzungsabstufungen, wie sie bei einem als Gruppenschaltgetriebe ausgelegten Synchronschaltgetriebe gegeben sind, braucht er nur den Schalthebel des Synchronschaltgetriebes zu bedienen und keine manuelle Nachstellung des Lastschaltgetriebes, auch Teillastschaltgetriebe genannt, vorzunehmen. Beim Zurückschalten des Synchronschaltgetriebes wird gegebenenfalls automatisch ein höherer Gang des Lastschaltgetriebes gewählt und umgekehrt. Kommt das Fahrzeug während des Betriebs zum Stillstand, so wird vorzugsweise automatisch der niedrigste Gang des Lastschaltgetriebes eingelegt.

Sofern die Drehzahlsensoren nicht unmittelbar an der Eingangswelle oder der Ausgangswelle der Fahrkupplung angebracht sind, kann in der Steuereinheit eine Umrechnung der gemessenen Drehzahlwerte erfolgen, bei der die Übersetzungsverhältnisse von Getriebekomponenten berücksichtigt werden, die zwischen dem jeweiligen Drehzahlsensor und der Fahrkupplung angeordneten sind. Es ist daher möglich, für die Erfassung der Drehzahlen Drehzahlsensoren zu verwenden, die auch für andere Zwecke, beispielsweise für die Motordrehzahlanzeige, verwendet werden.

Gemäß einer bevorzugten Ausgestaltung der Erfindung ist ein erster Drehzahlsensor zur Erfassung der Drehzahlen zwischen Antriebsmotor und Lastschaltgetriebe, welches der Fahrkupplung vorgeschaltet ist, und ein zweiter Drehzahlsensor zur Erfassung der Drehzahlen zwischen der Fahrkupplung und dem diesem nachgeordneten Synchronschaltgetriebe vorgesehen. Für diese Anordnung enthält die Steuereinheit vorzugsweise Mittel, die unter Berücksichtigung der Signale des ersten Drehzahlsensors und jedem einstellbaren Übersetzungsverhältnis des Lastschaltgetriebes korrespondierende Eingangsdrehzahlen für die Fahrkupplung berechnen und diese mit der gemessenen Drehzahl an der Kupplungsausgangswelle vergleichen, um für jedes Übersetzungsverhältnis zugehörige Drehzahlunterschiede, insbesondere in Form von Drehzahldifferenzen oder Drehzahlverhältnisse, zu ermitteln.

Eine weitere bevorzugte Ausgestaltung der Erfindung sieht vor, daß bei aktiviertem Anpassungs-Algorithmus die Signale der Drehzahlsensoren laufend ausgewertet werden, um theoretische Übersetzungsverhältnisse für das Lastschaltgetriebe zu berechnen, für die sich gleiche Drehzahlen zu beiden Seiten der Fahrkupplung ergeben würden. Für das Lastschaltgetriebe wird dann ein Gang ausgewählt, dessen tatsächliches Übersetzungsverhältnis dem errechneten theoretischen Übersetzungsverhältnis möglichst nahe kommt.

Das theoretische Übersetzungsverhältnis verändert sich bei geöffneter Fahrkupplung u.a. mit der Motordrehzahl und der Fahrgeschwindigkeit. Entsprechend paßt sich auch der gewählte Gang an diese Fahrbedingungen an. Bei der automatischen Auswahl des Ganges des Lastschaltgetriebes ermöglicht der Anpassungs-Algorithmus daher während des Auskuppelns eine Berücksichtigung aktueller Randbedingungen, wie z.B. eine Fahrbahnsteigung oder ein Fahrbahngefälle sowie die Belastung des Fahrzeugs.

Vorzugsweise erfolgt das Umschalten in einen neuen Gang des Lastschaltgetriebes unter Einbeziehung einer Hysterese, so daß sich ein stabiles Schaltverhalten ergibt. Beispielsweise liegen die Grenzwerte zur automatischen Umschaltung in einen höheren als den bisherigen Gang bei niedrigeren gemessenen Übersetzungsverhältnissen als die Grenzwerte zur automatischen Umschaltung in einen tieferen als den bisherigen Gang. Mit anderen Worten: Für ein Hochschalten des Lastschaltgetriebes in einen höheren Gang liegt der Umschaltpunkt bei einer höheren Drehzahl der Ausgangswelle der Fahrkupplung als unter sonst gleichen Bedingungen beim Runterschalten des Lastschaltgetriebes.

Es ist zweckmäßig, eine automatische Umschaltung des Lastschaltgetriebes nur dann vorzunehmen, wenn während des Auskuppelns der Gang des Sychronschaltgetriebes verändert wurde. Daher schlägt eine bevorzugte Weiterbildung der Erfindung eine Gangerkennungseinrichtung für das Synchrongetriebe vor, deren Signale ausgewertet werden, um nur dann Steuersignale zur automatischen Umschaltung des Lastschaltgetriebes abzugeben, wenn nach dem Auskuppeln ein Gangwechsel des Synchronschaltgetriebes festgestellt wurde.

Für die Gangerkennung des Synchronschaltgetriebes werden vorzugsweise die Drehzahlen beidseits des Synchronschaltgetriebes erfaßt und ins Verhältnis zueinander gesetzt. Dieses Verhältnis wird mit gespeicherten Werten verglichen, die den einstellbaren Übersetzungsverhältnissen des Lastschaltgetriebes entsprechen, um den eingestellten Gang des Synchronschaltgetriebes zu bestimmen. Hierfür können beispielsweise mit dem bereits genannten zweiten Drehzahlsensor die Drehzahl der Eingangswelle des Synchronschaltgetriebes und mit einem dritten Drehzahlsensor eine der Fahrgeschwindigkeit entsprechende Drehzahl erfaßt und ins Verhältnis zueinander gesetzt werden. Ändert sich das Verhältnis um einen bestimmten Betrag, so wird dies als Gangwechsel erkannt.

Die erfindungsgemäße Getriebesteuerung bzw. das erfindungsgemäße Verfahren sind auch bei Antriebsträngen anwendbar, die eine durch ein Bedienelement, beispielsweise einen Reversierhebel, ansteuerbare Reversiereinheit enthalten. Sofern hierbei die Gangabstufungen für Vorwärts- und Rückwärtsfahrt gleich sind, kann die Steuerung der Ganganpassung richtungsunabhängig erfolgen. Sind die Gangabstufungen jedoch unterschiedlich, so daß beispielsweise für die Rückwärtsgänge höhere Übersetzungsverhältnisse vorliegen als für die Vorwärtsgänge, benötigt die Steuerung Informationen über die Fahrtrichtung, um eine optimale Ganganpassung vorzunehmen. Es ist daher von Vorteil, Mittel zur Fahrtrichtungserkennung vorzusehen und das Fahrtrichtungssignal bei der Auswertung der Übersetzungsverhältnisse des Lastschaltgetriebes und/oder des Synchronschaltgetriebes einzubeziehen. Dabei werden für beide Fahrtrichtungen unterschiedliche Vorgaben im Anpassungs-Algorithmus verwendet. Bei Verwendung von Drehzahlsensoren, aus deren Signalen sich die Drehrichtung ableiten läßt, können anstelle eines gesonderten Fahrtrichtungssensorbauteils die Signale der Drehzahlsensoren zur Auswertung herangezogen werden.

Die Reversiereinheit und/oder die Fahrkupplung können in das Lastschaltgetriebegehäuse integriert sein.

Damit sich die Bedienungsperson zu jeder Zeit über den aktuell eingestellten Gang des Lastschaltgetriebes informieren kann, wird gemäß einer weiteren vorteilhaften Ausgestaltung der Erfindung vorgeschlagen, eine durch die Steuereinheit gesteuerte Ganganzeige zu verwenden.

Es ist wünschenswert, daß die Bedienungsperson den Gang des Synchronschaltgetriebes unabhängig von der genannten automatischen Einstellung selbst bestimmen und einstellen kann. Hierfür ist wenigstens eine manuell betätigbare Bedienungseinrichtung vorgesehen, durch die Signale an die Verstelleinrichtung abgegeben werden können, um eine Umschaltung des Lastschaltgetriebes vorzunehmen. Es ist von Vorteil, wenn bei Betätigung der Bedienungseinrichtung eine automatische Einstellung des Lastschaltgetriebes überfahren oder unterdrückt wird. Das Überfahren und die Unterdrückung können so lange anhalten, bis die Fahrkupplung geschlossen und zu einem späteren Zeitpunkt wieder geöffnet wird.

Eine einfache manuelle Steuerung des Synchronschaltgetriebes erfolgt vorzugsweise über zwei Tastschalter, von denen einer dem schrittweisen Hochschalten und der andere dem schrittweisen Runterschalten des Lastschaltgetriebes dient. Vorzugsweise sind die beiden Tastschalter auf dem Griff des Schalthebels für das Synchronschaltgetriebe angeordnet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Blockschaltbild eines Antriebsstrangs für einen Ackerschlepper,
- Fig. 2: ein Flußdiagramm für einen erfindungsgemäßen Anpassungs-Algorithmus,
- Fig. 3: ein Diagramm, anhand dessen das Hysterese-Verhalten der Auswahl des einzustellenden Ganges erläutert wird, und
- Fig. 4: eine Schaltungsanordnung für die Steuereinheit.

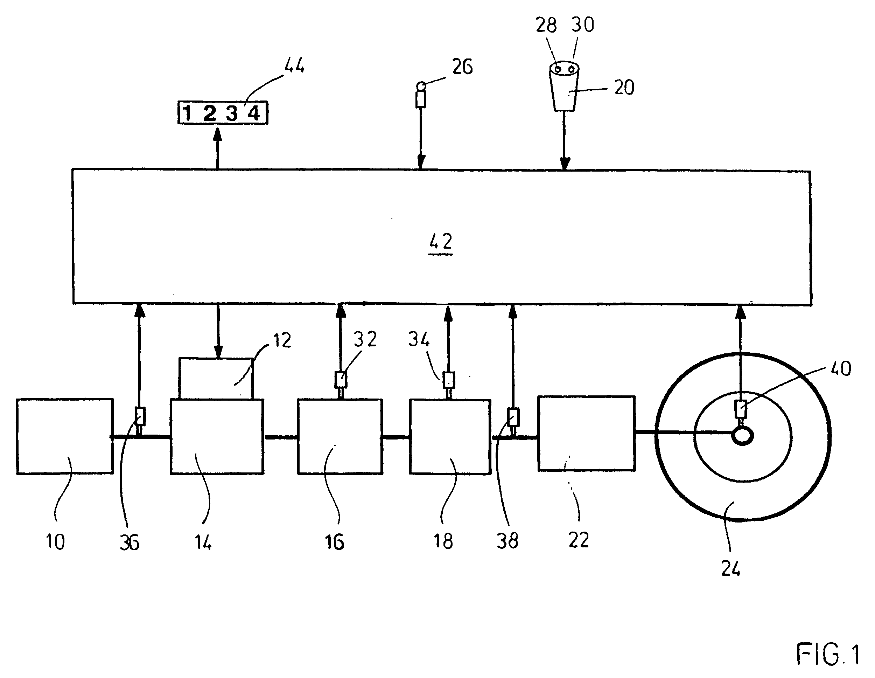

Aus der Fig. 1 geht der schematisch dargestellte Antriebsstrang eines nicht näher gezeigten Ackerschleppers hervor, der einen Antriebsmotor 10, ein durch eine Verstelleinrichtung 12 einstellbares Lastschaltgetriebe 14, eine Reversiereinheit 16, eine Fahrkupplung 18, ein über einen Schalthebel 20 schaltbares Synchronschaltgetriebe 22 und angetriebene Fahrzeugräder 24, von denen nur eins dargestellt ist, enthält. Bei dem Lastschaltgetriebe 14 handelt es sich um ein Teillastschaltgetriebe zur Schaltung der Gänge unter Last. Zur Schaltung der Gänge gibt eine Steuereinheit 42 entsprechende elektrische Signale an die Verstelleinrichtung 12 ab, die das Lastschaltgetriebe 14 mit elektrischen oder hydraulischen Signalen ansteuert. Das Synchronschaltgetriebe 22 ist als Gruppenschaltgetriebe ausgebildet. Die Reversiereinheit 16 dient der Umschaltung zwischen Vorwärtsfahrt und Rückwärtsfahrt und läßt sich durch einen Reversierhebel 26 umschalten. Auf dem Griff des Schalthebels 20 sind zwei Tastschalter 28, 30 in ergonomisch günstiger Lage angeordnet, durch die sich das Lastschaltgetriebe 14 manuell schrittweise hochschalten und runterschalten läßt.

Es ist ferner eine Getriebesteuerung angedeutet, die einen Fahrtrichtungssensor 32, einen Kupplungssensor 34, einen ersten Drehzahlsensor 36 zur Erfassung der Drehzahl des Antriebsmotors 10, einen zweiten Drehzahlsensor 38 zur Erfassung der Drehzahl auf der Ausgangsseite der Fahrkupplung 18, einen dritten Drehzahlsensor 40 zur Erfassung der Fahrgeschwindigkeitsdrehzahl und eine elektronischen Steuereinheit 42 enthält. Ferner ist eine Ganganzeige 44 dargestellt, durch die der jeweils eingestellte Gang des Lastschaltgetriebes 14 angezeigt wird. Die Steuereinheit 42 empfängt Signale des Fahrtrichtungssensors 32, des Kupplungssensors 34, der drei Drehzahlsensoren 36, 38, 40 und der beiden Tastschalter 28, 30. Sie gibt Steuersignale an die Verstelleinrichtung 12 und die Ganganzeige 44 ab.

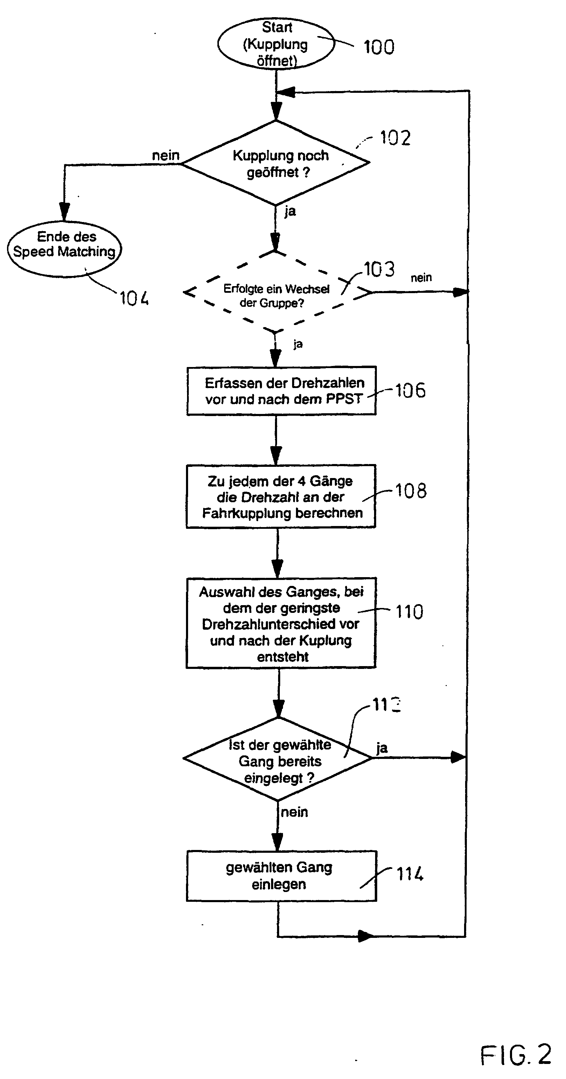

In Fig. 2 ist ein Flußdiagramm dargestellt, anhand dessen die Arbeitsweise der Steuereinheit 42 und das erfindungsgemäße Verfahren im folgenden erläutert werden:

Signalisiert der Kupplungssensor 34, daß die Fahrkupplung 18 geöffnet ist, wird in Schritt 100 ein Anpassungs-Algorithmus in Gang gesetzt, durch den gegebenenfalls automatisch ein anderer Gang des Lastschaltgetriebes 14 eingestellt wird. Schritt 102 prüft, ob die Fahrkupplung 18 noch geöffnet ist. Bei geschlossener Fahrkupplung 18 wird der Anpassungs-Algorithmus in Schritt 104 beendet. Bei geöffneter Fahrkupplung 18 erfaßt die Steuereinheit 42 in Schritt 106 die Signale der Drehzahlsensoren 36, 38 und gegebenenfalls 40. In Schritt 108 werden dann für jede einstellbare Gangkombination des Lastschaltgetriebes 14 hinsichtlich der ausgewählten Fahrtrichtung laufend die Drehzahlen berechnet, die sich an der Eingangswelle der Fahrkupplung 18 für die von dem ersten Drehzahlsensor 36 gemessenen Motordrehzahlen ergeben würden.

Hierzu stellt die Steuereinheit 42 zunächst anhand der Signale des Fahrtrichtungssensors 32 die Einstellung der Reversiereinheit 16 fest und greift auf das zugehörige, in der Steuereinheit 42 gespeicherte Übersetzungsverhältnis der Reversiereinheit 16 zurück. Dieses Übersetzungsverhältnis wird dann mit den abgespeicherten Übersetzungsverhältnissen jedes einstellbaren Ganges des Lastschaltgetriebes 14 multipliziert, so daß sich für jeden Gang ein Faktor ergibt. Mit diesen Faktoren wird der aktuelle, von dem ersten Drehzahlsensor 36 gemessene Motordrehzahlwert laufend multipliziert, so daß sich für jeden Gang ein zugehöriger theoretischer Drehzahlwert für die Eingangswelle der Fahrkupplung 18 ergibt, der von der Motordrehzahl abhängt.

Für ein Lastschaltgetriebe 14 mit 4 Gängen und eine Reversiereinheit 16 mit unterschiedlichen Übersetzungsverhältnissen für Vorwärtsfahrt und für Rückwärtsfahrt, lassen sich jeweils 4 Faktoren (Produkt aus den Übersetzungsverhältnissen von Lastschaltgetriebe 14 und Reversiereinheit 16) berechnen. In der Tabelle 1 sind geeignete Übersetzungsverhältnisse beispielhaft angegeben, um die Rechenvorgänge klarer darstellen zu können.

**Tabelle 1**

| Getriebe | Gang | Übersetzungsverhältnis |
|---|---|---|
| Lastschaltgetriebe | 1 | 1,767 |
| " | 2 | 1,466 |
| " | 3 | 1,225 |
| " | 4 | 1,000 |
| | | |
| Reversiereinheit | vorwärts | 1,000 |
| | rückwärts | -0,843 |

Aus diesen Werten errechnen sich für die vier Vorwärtsgänge die Faktoren 1,767, 1,466, 1,225 und 1,000 und für die vier Rückwärtsgänge die Faktoren -1,490, -1,236, -1,033 und -0,843. Mit den Faktoren für Vorwärtsfahrt oder mit den Faktoren für Rückwärtsfahrt werden die Meßwerte des ersten Drehzahlsensors 36 multipliziert, so daß vier Drehzahlen für die ausgewählte Fahrtrichtung zur Verfügung stehen. Dies sind die den einzelnen Gängen zugeordneten theoretischen Drehzahlen an der Eingangswelle der Fahrkupplung 18. Für den jeweils eingelegten Gang des Lastschaltgetriebes 14 ist die theoretische Drehzahl gleich der tatsächlichen Eingangsdrehzahl der Fahrtkupplung 18.

Es ergeben sich somit für das oben angegebene Beispiel vier theoretische Drehzahlen für die Vorwärtsgänge und vier theoretische Drehzahlen für die Rückwärtsgänge. Die theoretischen Drehzahlen werden in Schritt 110 mit der Ausgangsdrehzahl der Fahrkupplung 18, die von dem zweiten Drehzahlsensor 38 erfaßt wird, verglichen. Schritt 110 wählt aus den theoretischen Drehzahlen diejenige aus, die der an der Kupplungsausgangsseite gemessenen Drehzahl am nächsten kommt. Die ausgewählte Drehzahl definiert einen ausgewählten Gang des Lastschaltgetriebes 14.

Eine andere Möglichkeit der Auswertung in Schritt 110 besteht darin, daß aus den Drehzahlmeßwerten des ersten Drehzahlsensors 36 und des zweiten Drehzahlsensors 38 ein Quotient gebildet wird. Dieser Quotient wird mit den in der Steuereinheit 42 gespeicherten Werten der Übersetzungsverhältnisse des Lastschaltgetriebes 14 (gegebenfalls unter Berücksichtigung der Reversiereinheit 16) verglichen. Der Algorithmus wählt den Gang des Lastschaltgetriebes 14 aus, dessen Übersetzungsverhältnis am geringsten von dem Quotienten abweicht.

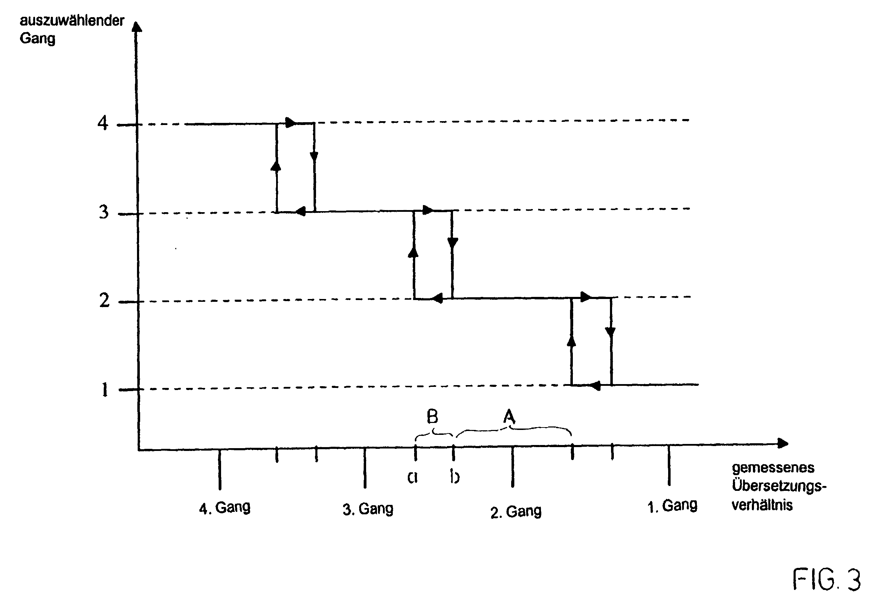

Um Unbestimmtheiten beim automatischen Umschalten zwischen den Gängen des Lastschaltgetriebes 14 zu vermeiden, ist es von Vorteil, bei der Gangauswahl einen Hysterese-Algorithmus zu verwenden, der im folgenden anhand Fig. 3 erläutert wird.

In Fig. 3 ist der durch Schritt 110 auszuwählende Gang über dem gemessenen (theoretischen) Übersetzungsverhältnis dargestellt. Das gemessene Übersetzungsverhältnis ist der Quotient aus den Drehzahlmeßwerten des ersten Drehzahlsensors 36 (vor dem Lastschaltgetriebe) und des zweiten Drehzahlsensors 38 (hinter der Fahrkupplung). Auf der Abzisse sind die festen Übersetzungsverhältnisse von vier Gängen des Lastschaltgetriebes 14 eingetragen.

Der Fig. 3 ist zu entnehmen, welcher Gang für ein gemessenes Übersetzungsverhältnis auszuwählen ist. Liegt das gemessene Übersetzungsverhältnis in der Nähe eines festen Übersetzungsverhältnisses des Lastschaltgetriebes 14 (z. B. in der Nähe des Ganges 2, d. h. im Bereich A), dann ergibt sich eindeutig der auszuwählende Gang (für den Bereich A ist es der Gang 2). Liegt das gemessene Übersetzungsverhältnis jedoch im Bereich zwischen zwei festen Übersetzungsverhältnissen des Lastschaltgetriebes 14 (z. B. zwischen den Gängen 2 und 3, d. h. im Bereich B), dann hängt die Auswahl des Ganges von der bisherigen Einstellung des Lastschaltgetriebes 14 ab.

Zur Umschaltung in einen höheren als den bisherigen Gang liegen die Schwellwerte bei kleineren gemessenen Übersetzungsverhältnissen als zur Umschaltung in einen kleineren als den bisherigen Gang. Dies wird in Fig. 3 durch Pfeile angedeutet. Befindet sich beispielsweise das Lastschaltgetriebe 14 zunächst im 2. Gang, dann muß das gemessene Übersetzungsverhältnis unter den Wert a abfallen, um die Auswahl des 3. Ganges auszulösen. Befindet sich hingegen das Lastschaltgetriebe 14 zunächst im 3. Gang, so muß das gemessene Übersetzungsverhältnis über den Wert b ansteigen, um die Auswahl des 2. Ganges auszulösen. Dabei ist b größer als a.

In Schritt 112 des in Fig. 2 dargestellten Algorithmus wird anhand der früher an die Verstellvorrichtung 12 abgegebenen Signale geprüft, ob der in Schritt 110 ausgewählte Gang für das Lastschaltgetriebe 14 bereits eingelegt ist. Ist dies der Fall, fährt der Algorithmus mit Schritt 102 fort. Andernfalls gibt die Steuereinheit 42 Signale an die Verstellvorrichtung 12 ab, welche ihrerseits elektrische oder hydraulische Signale an das Lastschaltgetriebe 14 zur Einstellung des gewählten Ganges übermittelt. Anschließend fährt der Algorithmus mit Schritt 102 fort. Damit die Bedienungsperson jederzeit Überprüfen kann, welcher Gang gerade eingelegt ist, wird der eingestellte Gang des Lastschaltgetriebes 14 durch die Ganganzeige 44 angezeigt.

Es ist zweckmäßig vorzusehen, daß die Bedienungsperson den Gang des Lastschaltgetriebes 14 selbst frei auswählen kann. Hierzu sind auf dem Griff des Schalthebels 20 zwei Tastschalter 28, 30 angeordnet. Durch ein- oder mehrfaches Drücken des einen Tastschalters 28 läßt sich das Lastschaltgetriebe 14 schrittweise hochschalten, durch Drücken des anderen Tastschalters 30 läßt es sich schrittweise runterschalten. Wird einer der beiden Tastschalter 28, 30 gedrückt, so wird für ein vorgebbares Zeitintervall oder bis zu einem erneuten Öffnen der Fahrkupplung 18 der Anpassungs-Algorithmus unterbrochen. Die Einstellung der Gänge des Lastschaltgetriebes 14 erfolgt nun ausschließlich aufgrund der durch die Tastschalter 28, 30 vorgegebenen Schaltsignale.

Gemäß einer bevorzugten Ausgestaltung der Erfindung wird der Anpassungs-Algorithmus nur dann ausgeführt, wenn seit dem Öffnen der Fahrkupplung 18 ein Gangwechsel des Synchronschaltgetriebes 22 erfolgt ist. Zu diesem Zweck kann in den in Fig. 2 dargestellten Algorithmus zwischen die Schritte 102 und 106 ein weiterer, gestrichelt dargestellter Schritt 103 eingefügt werden. Schritt 103 wertet die Meßsignale des zweiten Drehzahlsensors 38 und des dritten Drehzahlsensors 40 aus, um den eingestellten Gang des Synchrongetriebes 22 zu ermitteln. Dies kann beispielsweise dadurch erfolgen, daß der Quotient der beiden Drehzahlmeßwerte gebildet und mit in der Steuereinheit 42 gespeicherten Werten der Übersetzungsverhältnisse des Synchronschaltgetriebes 22 verglichen wird. Wurde seit dem mit Schritt 100 ausgelösten Start des Algorithmus kein Gang- bzw. Gruppenwechsel des Synchronschaltgetriebes 22 durchgeführt, so erfolgt eine Rückführung zu Schritt 102. Wird ein Gangwechsel festgestellt, fährt der Algorithmus mit Schritt 106 fort.

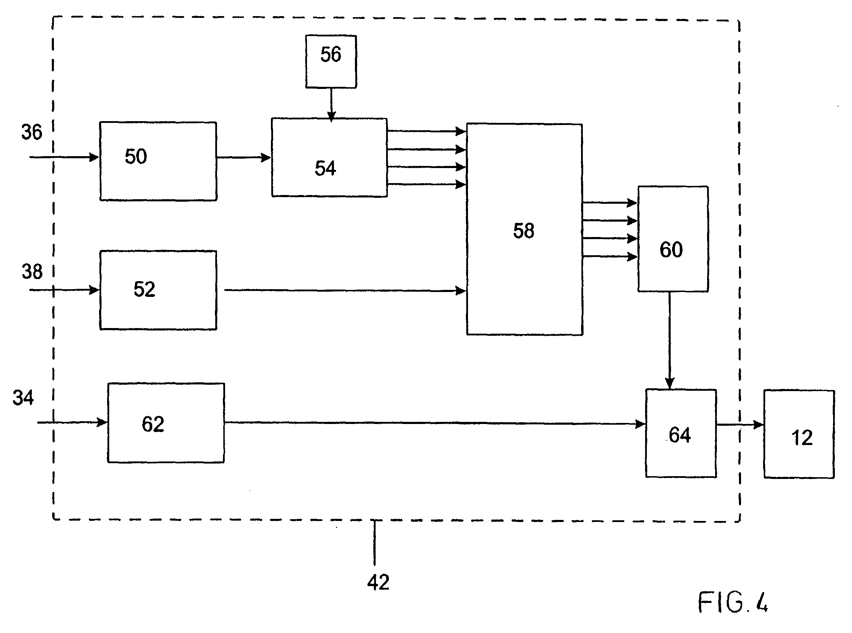

Alternativ zu einem programmierbaren und durch die Steuereinheit 42 ausgeführten Steuer-Algorithmus kann die Steuereinheit 42 auch Schaltungselemente enthalten, die die Steuersignale für die Verstelleinrichtung 12 bereitstellen. Fig. 4 zeigt schematisch eine entsprechende Schaltungsanordnung. Demnach werden die Meßsignale des ersten Drehzahlsensors 36 und des zweiten Drehzahlsensors 38 in zugehörigen Auswerteeinrichtungen 50, 52 erfaßt und für die Weiterverarbeitung aufbereitet, z. B. digitalisiert. Die Ausgangssignale der Auswerteeinrichtung 50 werden in einem Produktbildner 54 mit den einstellbaren Übersetzungsverhältnissen des Lastschaltgetriebes 14, die einem Speicher 56 entnommen werden, multipliziert, um theoretische Drehzahlen an der Eingangswelle der Fahrkupplung 18 für jedes Übersetzungsverhältnis zu berechnen. Dabei wird für jedes Übersetzungsverhältnis ein zugehöriger theoretischer Drehzahlwert ausgegeben. Die theoretischen Drehzahlwerte (entsprechend den 4 dargestellten Pfeilen) werden in einer Vergleichseinrichtung 58 mit den Ausgangssignalen der Auswerteeinrichtung 52, die den aktuellen Drehzahlen an der Ausgangswelle der Fahrkupplung 18 entsprechen, verglichen. Die Vergleichseinrichtung 58 gibt für jedes Übersetzungsverhältnis ein Drehzahldifferenzsignal an eine Auswahleinrichtung 60 ab. Die Auswahleinrichtung 60 ermittelt den Gang des Lastschaltgetriebes 14, für den sich das kleinste Drehzahldifferenzsignal ergibt. Sie gibt entsprechende Umschaltsignale für das Lastschaltgetriebe 14 aus. Die Signale des Kupplungssensors 34 werden in einer Auswerteeinrichtung 62 aufbereitet, welche Signale an eine Umschalteinrichtung 64 abgibt, die dem Zustand der Fahrkupplung 18 (eingerückt/ausgerückt) entsprechen. Die Umschalteinrichtung 64 leitet die Signale der Auswahleinrichtung 60 nur dann an die Verstelleinrichtung 12 weiter, wenn die Fahrkupplung 18 ausgerückt ist.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

Beispielsweise ist es möglich, den in Fig. 1 dargestellten Drehzahlsensor 36 an anderer Stelle anzuordnen, so daß er nicht die Aüsgangsdrehzahl des Antriebsmotors 10 erfaßt, sondern die Drehzahl zwischen dem Lastschaltgetriebe und der Reversiereinheit oder die Drehzahl zwischen der Reversiereinheit und der Fahrkupplung. In diesem Fall muß der anhand der Fig. 2 erläuterte Algorithmus zur Berechnung der theoretischen Drehzahl an der Eingangswelle der Fahrkupplung 18 entsprechend angepaßt werden.

## Patentansprüche

1. Getriebesteuerung für das Lastschaltgetriebe (14) des Antriebsstranges eines Arbeitsfahrzeugs, insbesondere eines Ackerschleppers, welcher Antriebsstrang wenigstens einen Antriebsmotor (10), ein durch eine Verstelleinrichtung (12) einstellbares Lastschaltgetriebe (14), eine Fahrkupplung (18), ein über einen Schalthebel (20) schaltbares Synchronschaltgetriebe (22) und angetriebene Fahrzeugräder (24) enthält, **dadurch gekennzeichnet, daß**
die Getriebesteuerung einen Kupplungssensor (34), wenigstens zwei Drehzahlsensoren (36, 38) zur Erfassung von Drehzahlen beidseits der Fahrkupplung (18) und eine elektronische Steuereinheit (42) enthält und, daß die Steuereinheit (42)
- Mittel zur Auswertung der Signale des Kupplungssensors (34) und zur Feststellung des Schaltzustandes der Fahrkupplung (18),
- Mittel zur Auswertung der Signale der Drehzahlsensoren (36, 38) und zur Bestimmung von aktuellen Drehzahlunterschieden zwischen der Eingangswelle und der Ausgangswelle der Fahrkupplung (18) für die einstellbaren Übersetzungsverhältnisse des Lastschaltgetriebes (14),
- Mittel zur Auswahl des Ganges des Lastschaltgetriebes (14), für den sich möglichst geringe Drehzahlunterschiede ergeben, und
- Mittel zur Abgabe von Steuersignalen an die Verstelleinrichtung (12) des Lastschaltgetriebes (14) zur automatischen Einstellung des ausgewählten Ganges, sofern die Fahrkupplung (18) offen ist,
aufweist.

2. Getriebesteuerung nach Anspruch 1, **dadurch gekennzeichnet, daß** ein erster Drehzahlsensor (36) zur Erfassung der Drehzahlen zwischen Antriebsmotor (10) und Lastschaltgetriebe (14), welches der Fahrkupplung (18) vorgeschaltet ist, und ein zweiter Drehzahlsensor (38) zur Erfassung der Drehzahlen zwischen Fahrkupplung (18) und nachgeordnetem Synchronschaltgetriebe (22) vorgesehen sind und daß die Steuereinheit (42) Mittel enthält, die unter Berücksichtigung der Signale des ersten Drehzahlsensors (36) und der einstellbaren Übersetzungsverhältnisse des Lastschaltgetriebes (14) korrespondierende Eingangsdrehzahlen für die Fahrkupplung (18) berechnen und diese mit den vom zweiten Drehzahlsensor (38) erfaßten Drehzahlen vergleichen, um für jedes Übersetzungsverhältnis zugehörige Drehzahlunterschiede, insbesondere Drehzahldifferenzen oder Drehzahlverhältnisse, zu ermitteln.

3. Getriebesteuerung nach Anspruch 1 oder 2, **dadurch gekennzeichnet, daß** die Steuereinheit (42) Mittel enthält, die laufend die Signale der Drehzahlsensoren (36, 38) auswerten und theoretische Übersetzungsverhältnisse für das Lastschaltgetriebe (14) berechnen, für die sich gleiche Drehzahlen zu beiden Seiten der Fahrkupplung (18) ergeben würden, und die für das Lastschaltgetriebe (14) einen Gang auswählen, dessen Übersetzungsverhältnis dem theoretischen Übersetzungsverhältnis möglichst nahe kommt.

4. Getriebesteuerung nach einem der Ansprüche 1 bis 3, **dadurch gekennzeichnet, daß** eine Gangerkennungseinrichtung für das Synchronschaltgetriebe (22) vorgesehen ist und die Steuereinheit (42) Mittel enthält, die nur dann eine Abgabe von Steuersignalen zur Umschaltung des Lastschaltgetriebes (14) ermöglichen, wenn nach dem Auskuppeln ein Gangwechsel des Synchronschaltgetriebes (22) festgestellt wurde.

5. Getriebesteuerung nach einem der Ansprüche 1 bis 4, **dadurch gekennzeichnet, daß** ein zweiter Drehzahlsensor (38) und ein dritter Drehzahlsensor (40) beidseits des Synchronschaltgetriebes (22) angeordnet sind, und daß die Steuereinheit (42) Mittel enthält, die das Verhältnis der Signale des zweiten und des dritten Drehzahlsensors (40) auswerten und mit gespeicherten Werten der einstellbaren Übersetzungsverhältnisse des Lastschaltgetriebes (14) vergleicht, um den eingestellten Gang des Synchronschaltgetriebes (22) zu bestimmen.

6. Getriebesteuerung nach einem der Ansprüche 1 bis 5, **dadurch gekennzeichnet, daß** für einen Antriebsstrang, der eine über ein Bedienelement (26) ansteuerbare Reversiereinheit(16) enthält, die Getriebesteuerung Mittel (32) zur Fahrtrichtungserkennung aufweist, deren Signale bei der Auswertung der Übersetzungsverhältnisse des Lastschaltgetriebes (14) und/oder des Synchronschaltgetriebes (22) einbezogen werden.

7. Getriebesteuerung nach einem der Ansprüche 1 bis 6, **dadurch gekennzeichnet, daß** eine Ganganzeige (44) zur Anzeige des jeweils eingestellten Gangs des Lastschaltgetriebes (14) vorgesehen ist.

8. Getriebesteuerung nach einem der Ansprüche 1 bis 7, **dadurch gekennzeichnet, daß** wenigstens eine Bedienungseinrichtung (28, 30) zur manuellen Vorgabe von Umschaltsignalen an die Verstelleinrichtung (12) des Lastschaltgetriebes (14) vorgesehen ist, und daß die Steuereinheit (42) Mittel aufweist, die bei Betätigung der Bedienungseinrichtung (28, 30) eine automatische Einstellung des Lastschaltgetriebes (14) überfahren oder unterdrücken.

9. Getriebesteuerung nach einem der Ansprüche 1 bis 8, **dadurch gekennzeichnet, daß** die Bedienungseinrichtung zwei manuell betätigbare Tastschalter (28, 30) enthält, derart, daß bei Betätigung eines ersten Tastschalters (28) ein schrittweises Hochschalten und bei Betätigung eines zweiten Tastschalters (30) ein schrittweises Runterschalten des Lastschaltgetriebes (14) erfolgt.

10. Getriebesteuerung nach Anspruch 9, **dadurch gekennzeichnet, daß** die Tastschalter (28, 30) auf dem Griff des Schalthebels (20) für das Synchronschaltgetriebe (22) angeordnet sind.

11. Steuerverfahren für das Lastschaltgetriebes (14) des Antriebsstranges eines Arbeitsfahrzeugs, insbesondere eines Ackerschleppers, wobei der Antriebsstrang wenigstens einen Antriebsmotor (10), ein durch eine Verstelleinrichtung (12) einstellbares Lastschaltgetriebe (14), eine Fahrkupplung (18), ein über einen Schalthebel (20) schaltbares Synchronschaltgetriebe (22), angetriebene Fahrzeugräder (24) und eine Getriebesteuerung enthält, **dadurch gekennzeichnet, daß** die Getriebesteuerung einen Kupplungssensor (34), wenigstens zwei Drehzahlsensoren (36, 38) zur Erfassung von Drehzahlen beidseits der Fahrkupplung (18) und eine elektronische Steuereinheit (42) enthält, die folgende Verfahrensschritte ausführt:
- Feststellung des Schaltzustands der Fahrkupplung (18) anhand der Signale des Kupplungssensors (34),
- Auswertung der Signale der Drehzahlsensoren (36, 38), um aktuelle Drehzahlunterschiede zwischen der Eingangswelle und der Ausgangswelle der Fahrkupplung (18) für die einstellbaren Übersetzungsverhältnisse des Lastschaltgetriebes (14) zu ermitteln,
- Auswahl des Ganges des Lastschaltgetriebes (14), für den sich möglichst geringe Drehzahlunterschiede ergeben, und
- Ansteuerung der Verstelleinrichtung (12) des Lastschaltgetriebes (14) zur Beibehaltung bzw. zur automatischen Einstellung des ausgewählten Ganges, sofern ein offener Schaltzustand der Fahrkupplung (18) festgestellt wurde.

12. Steuerverfahren nach Anspruch 11, für eine Getriebesteuerung, die einen ersten Drehzahlsensor (36) zur Erfassung der Drehzahlen zwischen Antriebsmotor (10) und Lastschaltgetriebe (14), welches der Fahrkupplung (18) vorgeschaltet ist, und einen zweiten Drehzahlsensor (38) zur Erfassung der Drehzahlen zwischen Fahrkupplung (18) und nachgeordneten Synchronschaltgetriebe (22) enthält, **dadurch gekennzeichnet, daß** unter Berücksichtigung der Signale des ersten Drehzahlsensors (36) und der einstellbaren Übersetzungsverhältnisse des Lastschaltgetriebes (14) korrespondierende Eingangsdrehzahlen für die Fahrkupplung (18) berechnen und diese mit den vom zweiten Drehzahlsensor (38) erfaßten Drehzahlen verglichen werden, um für jedes Übersetzungsverhältnis zugehörige Drehzahlunterschiede, insbesondere Drehzahldifferenzen oder Drehzahlverhältnisse, zu ermitteln.

13. Steuerverfahren nach Anspruch 11 oder 12, **dadurch gekennzeichnet, daß** laufend die Signale der Drehzahlsensoren (36, 38) ausgewertet und theoretische Übersetzungsverhältnisse für das Lastschaltgetriebe (14) berechnet werden, für die sich gleiche Drehzahlen zu beiden Seiten der Fahrkupplung (18) ergeben würden, und daß für das Lastschaltgetriebe (14) ein Gang ausgewählt wird, dessen Übersetzungsverhältnis dem theoretischen Übersetzungsverhältnis möglichst nahe kommt.

14. Verfahren nach einem der Ansprüche 11 bis 13, **dadurch gekennzeichnet, daß** die Umschaltung des Lastschaltgetriebes (14) unter Einbeziehung einer Hysterese erfolgt.

15. Verfahren nach einem der Ansprüche 11 bis 14, **dadurch gekennzeichnet, daß** mit Hilfe einer Gangerkennungseinrichtung der eingestellte Gang des Synchronschaltgetriebes (22) festgestellt wird und daß eine Umschaltung des Lastschaltgetriebes (14) nur dann erfolgt, wenn nach dem Auskuppeln ein Gangwechsel des Synchronschaltgetriebes (22) festgestellt wurde.

16. Verfahren nach einem der Ansprüche 11 bis 15, **dadurch gekennzeichnet, daß** die Drehzahlen beiderseits des Synchronschaltgetriebes (22) erfaßt und ins Verhältnis zueinander gesetzt werden und daß dieses Verhältnis mit gespeicherten Werten der einstellbaren Übersetzungsverhältnisse des Synchrongetriebes verglichen werden, um einen Gangwechsel festzustellen.

17. Verfahren nach einem der Ansprüche 11 bis 16, **dadurch gekennzeichnet, daß** im Bedarfsfall manuell über eine Bedienungseinrichtung (28, 30) Umschaltsignale an die Verstelleinrichtung (12) des Lastschaltgetriebes (14) abgegeben werden und daß die Steuereinheit (42) bei einer Betätigung der Bedienungseinrichtung (28, 30) eine automatische Einstellung des Lastschaltgetriebes (14) überfährt oder unterdrückt.

18. Verfahren nach einem der Ansprüche 11 bis 17, **dadurch gekennzeichnet, daß** zur Erzeugung von Schaltimpulsen für das manuelle Hochschalten bzw. Runterschalten des Lastschaltgetriebes (14) ein erster oder ein zweiter Tastschalter (28, 30) gedrückt wird und daß bei jedem Schaltimpuls des Tasters (28, 30) das Lastschaltgetriebe (14) um einen Gang hochgeschaltet bzw. runtergeschaltet wird.

## Claims

1. A transmission control system for the power shift transmission (14) of the drive train of a utility vehicle, especially an agricultural tractor, which drive train includes at least one drive engine (10), a power shift transmission (14) which can be set by an actuating device (12), a driving clutch (18), a synchronised gearbox (22) which can be shifted by a shift lever (20) and driven vehicle wheels (24), **characterized in that** the transmission control system includes a clutch sensor (34), at least two speed of rotation sensors (36, 38) for detecting the speeds of rotation on the two sides of the driving clutch (18) and an electronic control unit (42), and **in that** the control unit (42) comprises
- means for evaluating the signals of the clutch sensor (34) and for determining the engagement state of the driving clutch (18),
- means for evaluating the signals of the speed of rotation sensors (36, 38) and for determining current differences between the speeds of rotation of the input shaft and the output shaft of the driving clutch (18) for the selectable transmission ratio of the power shift transmission (14),
- means for selecting the gear of the power shift transmission (14) which gives the smallest possible differences in the speeds of rotation, and
- means for issuing control signals to the actuating device (12) of the power shift transmission (14) for the automatic selection of the chosen gear, insofar as the driving clutch (18) is open.

2. A transmission control system according to claim 1, **characterized in that** a first speed of rotation sensor (36) is provided for detecting the speed of rotation between the drive engine (10) and the power shift transmission (14), which precedes the driving clutch (18), and a second speed of rotation sensor (38) is provided for detecting the speed of rotation between the driving clutch (18) and the following synchronised gearbox (22), and **in that** the control unit (42) includes means which, having regard to the signals of the first speed of rotation sensor (36) and the selectable transmission ratios of the power shift transmission (14), calculate corresponding input speeds of rotation for the driving clutch (18) and compare these with the speeds of rotation detected by the second speed of rotation sensor (3 8), in order to determine associated speed of rotation discrepancies for each transmission ratio, especially speed of rotation differences or speed of rotation ratios.

3. A transmission control system according to claim 1 or 2, **characterized in that** the control unit (42) includes means which evaluate the signals of the speed of rotation sensors (36, 38) continuously and compute theoretical transmission ratios for the power shift transmission (14) for which the same speeds of rotation would result on the two sides of the driving clutch (18), and which select a gear for the power shift transmission (14) whose transmission ratio comes the closest to the theoretical transmission ratio.

4. A transmission control system according to any of claims 1 to 3, **characterized in that** a gear identification device is provided for the synchronised gearbox (22) and the control unit (42) includes means which enable issue of control signals for shifting the power shift transmission (14) only when a gear change of the synchronised gearbox (22) has been detected after the declutching.

5. A transmission control system according to any of claims 1 to 4, **characterized in that** a second speed of rotation sensor (38) and a third speed of rotation sensor (40) are arranged on the two sides of the synchronised gearbox (22) and **in that** the control unit (42) includes means which evaluate the ratio of the signals of the second and the third speed of rotation sensor (40) and compare these with stored values of the selectable transmission ratios of the power shift transmission (14), in order to determine the engaged gear of the synchronised gearbox (22).

6. A transmission control system according to any of claims 1 to 5, **characterized in that**, for a drive train which includes a reversing unit (16) controllable by an operating element (26), the transmission control system comprises means (32) for detecting the direction of travel, whose signals are involved in the evaluation of the transmission ratios of the power shift transmission (14) and/or the synchronised gearbox (22).

7. A transmission control system according to any of claims 1 to 6, **characterized in that** a gear indicator (44) is provided for displaying each selected gear of the power shift transmission (14).

8. A transmission control system according to any of claims 1 to 7, **characterized in that** at least one operating device (28, 30) is provided for manual input of shift signals to the actuating device (12) of the power shift transmission (14), and **in that** the control unit (42) comprises means which override or suppress an automatic setting of the power shift transmission (14) on actuation of the operating device (28, 30).

9. A transmission control system according to any of claims 1 to 8, **characterized in that** the operating device includes two manually operable push button switches (28, 30), such that a stepped shift up of the power shift transmission (14) is effected on actuation of the first push button switch (28) and stepped shift down is effected on actuation of the second push button switch (30).

10. A transmission control system according to claim 9, **characterized in that** the push button switches (28, 30) are arranged on the handle of the shift lever (20) for the synchronised gearbox (22).

11. A control method for the power shift transmission (14) of the drive train of a utility vehicle, especially an agricultural tractor, wherein the drive train includes at least one drive engine (10), a power shift transmission (14) which can be set by an actuating device (12), a driving clutch (18), a synchronised gearbox (22) which can be shifted by a shift lever (20), driven vehicle wheels (24) and a transmission control system, **characterized in that** the transmission control system includes a clutch sensor (34), at least two speed of rotation sensors (36, 38) for detecting the speeds of rotation on the two sides of the driving clutch (18) and an electronic control unit (42), which performs the following method steps:
- determining the engagement state of the driving clutch (18) on the basis of the signals of the clutch sensor (34),
- evaluating the signals of the speed of rotation sensors (36, 38), in order to determine current differences between the speeds of rotation of the input shaft and the output shaft of the driving clutch (18) for the selectable transmission ratio of the power shift transmission (14),
- selecting the gear of the power shift transmission (14) which gives the smallest possible differences in the speeds of rotation, and
- controlling the actuating device (12) of the power shift transmission (14) for maintaining or automatic selection of the chosen gear, insofar as an open state of the driving clutch (18) is ascertained.

12. A control method according to claim 11, for a transmission control system which includes a first speed of rotation sensor (36) for detecting the speed of rotation between the drive engine (10) and the power shift transmission (14), which precedes the driving clutch (18), and a second speed of rotation sensor (38) for detecting the speed of rotation between the driving clutch (18) and the following synchronised gearbox (22), **characterized in that**, having regard to the signals of the first speed of rotation sensor (36) and the selectable transmission ratios of the power shift transmission (14), corresponding input speeds of rotation for the driving clutch (18) are calculated and compared with the speeds of rotation detected by the second speed of rotation sensor (38), in order to determine associated speed of rotation discrepancies for each transmission ratio, especially speed of rotation differences or speed of rotation ratios.

13. A control method according to either claim 11 or 12, **characterized in that** the signals of the speed of rotation sensors (36, 38) are evaluated continuously and theoretical transmission ratios for the power shift transmission (14) for which the same speeds of rotation on the two sides of the driving clutch (18) would result are calculated, and **in that** a gear is selected for the power shift transmission (14) whose transmission ratio comes the closest to the theoretical transmission ratio.

14. A method according to any of claims 11 to 13, **characterized in that** the shifting of the power shift transmission (14) is effected taking into account hysteresis.

15. A method according to any of claims 11 to 14, **characterized in that** the engaged gear of the synchronised gearbox (22) is determined with the aid of a gear detection device and **in that** a shift of the power shift transmission (14) is effected only when a gear change of the synchronised gearbox (22) has been detected after the declutching.

16. A method according to any of claims 11 to 15, **characterized in that** the speeds of rotation on the two sides of the synchronised gearbox (22) are detected and placed in a ratio with one another and **in that** this ratio is compared with stored values of the selectable transmission ratios of the synchronised gear, in order to establish a gear change.

17. A method according to any of claims 11 to 16, **characterized in that**, in case of need, shift signals are issued manually to the actuating device (12) of the power shift transmission (14) through an operating device (28, 30) and **in that** the control unit (42) overrides or suppresses an automatic setting of the power shift transmission (14) on actuation of the operating device (28, 29).

18. A method according to any of claims 11 to 17, **characterized in that** a first or a second push button switch (28, 30) is depressed for generation of shift pulses for the manual shift up or shift down respectively of the power shift transmission (14) and **in that** the power shift transmission (14) is shifted up or down respectively by one gear for each shift pulse of the push button (28, 30).

## Revendications

1. Commande de boîte de vitesses pour la boîte de vitesses en charge (14) de la branche d'entraînement d'un véhicule utilitaire, plus particulièrement d'un tracteur agricole, laquelle branche d'entraînement comprend au moins un moteur d'entraînement (10), une boîte de vitesses en charge (14) réglable grâce à un dispositif de réglage (12), une boîte de vitesses synchrone (22) actionnable grâce à un levier de vitesses (20) et les roues du véhicules entraînées (24), **caractérisée en ce que** la commande de boîte de vitesses comprend un capteur d'embrayage (34), au moins deux capteurs de vitesse de rotation (36, 38) pour la détermination des vitesses de rotation des deux côtés de l'embrayage de manoeuvre (18) et une unité de contrôle électronique (42) et **en ce que** l'unité de contrôle (42) comprend :
- des moyens d'analyse des signaux du capteur d'embrayage (34) et pour la détermination de l'état de l'embrayage de manoeuvre (18),
- des moyens d'analyse des signaux des capteurs de vitesse de rotation (36, 38) et pour la détermination des différences de vitesses de rotation entre l'arbre d'entrée et l'arbre de sortie de l'embrayage de manoeuvre (18) pour les démultiplications pouvant être réglées dans la boîte de vitesses en charge (14),
- Des moyens de sélection du rapport de la boîte de vitesses en charge (14) pour lequel les différences entre les vitesses de rotation sont les plus faibles possible, et
- des moyens d'émission de signaux de contrôle vers le dispositif de réglage (12) de la boîte de vitesses en charge (14) pour le réglage automatique du rapport sélectionné si l'embrayage de manoeuvre (18) est ouvert.

2. Commande de boîte de vitesses selon la revendication 1, **caractérisée en ce qu'**un premier capteur de vitesse de rotation (36) est prévu pour la détermination des vitesses de rotation entre le moteur d'entraînement (10) et la boîte de vitesses en charge (14) qui est branchée en amont de l'embrayage de manoeuvre (18), et un deuxième capteur de vitesse de rotation (38) est prévu pour la détermination des vitesses de rotation entre l'embrayage de manoeuvre (18) et la boîte de vitesses synchrone (22) branchée en aval et **en ce que** l'unité de contrôle (42) comprend des moyens de calcul des vitesses de rotation d'entrée correspondantes de l'embrayage de manoeuvre (18) en prenant en compte les signaux du premier capteur de vitesse de rotation (36) et les démultiplications réglables dans la boîte de vitesses en charge (14), et de comparaison de celles-ci avec les vitesses de rotation déterminées par le deuxième capteur de vitesse de rotation (38), afin de calculer, pour chaque démultiplication, les écarts entre les vitesses de rotation, notamment des différences de vitesses de rotation et des quotients de vitesses de rotation.

3. Commande de boîte de vitesses selon la revendication 1 ou 2, **caractérisée en ce que** l'unité de contrôle (42) contient des moyens qui analysent en permanence les signaux des capteurs de vitesse de rotation (36, 38) et calculent les démultiplications théoriques de la boîte de vitesses en charge (14), pour lesquelles les mêmes vitesses de rotation seraient obtenues des deux côtés de l'embrayage de manoeuvre (18), et qui sélectionnent un rapport de la boîte de vitesses en charge (14) dont la démultiplication est le plus proche possible de la démultiplication théorique.

4. Commande de boîte de vitesses selon l'une des revendications 1 à 3, **caractérisée en ce qu'**un dispositif de détection de rapport soit prévu dans la boîte de vitesses synchrone (22) et **en ce que** l'unité contrôle (42) comprend des moyens qui ne permettent une émission de signaux de contrôle pour l'enclenchement de la boîte de vitesses en charge (14) que, lorsque après le débrayage, un changement de rapport de la boîte de vitesses synchrone (22) a été constaté.

5. Commande de boîte de vitesses selon l'une des revendications 1 à 4, **caractérisée en ce qu'**un deuxième capteur de vitesse de rotation (38) et un troisième capteur de vitesse de rotation (40) est disposé des deux côtés de la boîte de vitesses synchrone (22) et **en ce que** l'unité de contrôle (42) contient des moyens qui analysent le quotient des signaux du deuxième et du troisième capteur de vitesse de rotation (40) et le comparent avec des valeurs enregistrées des démultiplications réglables dans la boîte de vitesses en charge (14), afin de déterminer le rapport enclenché de la boîte de vitesses synchrone (22).

6. Commande selon l'une des revendications 1 à 5, **caractérisée en ce que**, pour une branche d'entraînement comprenant une unité réversible (16) actionnable à l'aide d'un élément d'actionnement (26), la commande de boîte de vitesses comporte des moyens (32) pour la détection du sens de la marche dont les signaux sont pris en compte lors de l'analyse des démultiplications de la boîte de vitesses en charge (14) et/ou de la boîte de vitesses synchrone (22).

7. Commande de boîte de vitesses selon l'une des revendications 1 à 6, **caractérisée en ce qu'**un affichage des rapports (44) soit prévu pour afficher le rapport enclenché dans la boîte de vitesses en charge (14).

8. Commande de boîte de vitesses selon l'une des revendications 1 à 7, **caractérisée en ce qu'**au moins un dispositif d'actionnement (28, 30) est prévu pour l'émission manuelle de signaux d'enclenchement vers le dispositif de réglage (12) de la boîte de vitesses en charge (14) et **en ce que** l'unité de contrôle (42) comprend des moyens qui, lors de l'actionnement du dispositif d'actionnement (28, 30), ignorent ou inhibent le réglage automatique de la boîte de vitesses en charge (14).

9. Commande de boîte de vitesses selon l'une des revendications 1 à 8, **caractérisée en ce que** le dispositif d'actionnement comporte deux boutons-poussoirs (28, 30) actionnables manuellement, de telle sorte que, lors de l'actionnement d'un premier bouton-poussoir (28) un passage progressif au rapport supérieur soit réalisé et que lors de l'actionnement d'un deuxième bouton-poussoir (30) un passage au rapport inférieur de la boîte de vitesses en charge (14) soit réalisé.

10. Commande de boîte de vitesses selon la revendication 9, **caractérisée en ce que** les boutons-poussoirs (28, 30) sont disposés sur la poignée du levier de vitesse (20) de la boîte de vitesses synchrone (22).

11. Procédé de contrôle de la boîte de vitesses en charge (14) de la branche d'entraînement d'un véhicule utilitaire, notamment d'un tracteur agricole, la branche d'entraînement comprenant au moins un moteur d'entraînement (10), une boîte de vitesses en charge (14) réglage à l'aide d'un dispositif de réglage (12), un embrayage de manoeuvre (18), une boîte de vitesses synchrone (22) actionnable à l'aide d'un levier de vitesse (20), les roues du véhicule entraînées (24) et une commande de boîte de vitesses, **caractérisée en ce que** la commande de boîte de vitesses comprend un capteur d'embrayage (34), au moins deux capteurs de vitesse de rotation (36, 38) pour la détermination des vitesses de rotation des deux côtés de l'embrayage de manoeuvre (18) et une unité de contrôle électronique (92), réalisant les étapes de procédé suivantes :
- Détermination de l'état de l'embrayage de manoeuvre (18) à l'aide des signaux du capteur d'embrayage (34),
- Analyse des signaux des capteurs de vitesse de rotation (36, 38), afin de déterminer les écarts actualisés de vitesses rotation entre l'arbre d'entrée et l'arbre de sortie de l'embrayage de manoeuvre (18) pour les démultiplications réglables dans la boîte de vitesses en charge (14),
- Sélection du rapport de la boîte de vitesses en charge (14) pour lequel les écarts entre les vitesses de rotation sont les plus faibles possible, et
- Contrôle du dispositif de réglage (12) de la boîte de vitesses en charge (14) pour le maintien ou le réglage automatique du rapport sélectionné, si un état ouvert de l'embrayage de manoeuvre (18) est détecté.

12. Procédé de contrôle selon la revendication 11, pour une commande de boîte de vitesses qui comprend un premier capteur de vitesse de rotation (36) des vitesses de rotation entre le moteur d'entraînement (10) et la boîte de vitesses en charge (14) qui est branchée en amont de l'embrayage de manoeuvre (18), et un deuxième capteur de vitesse de rotation (38) pour la détermination des vitesses de rotation entre l'embrayage de manoeuvre (18) et la boîte de vitesses synchrone (22) disposée en aval, **caractérisé en ce que** les vitesses de rotation d'entrée appropriées de l'embrayage de manoeuvre (18) sont calculées en prenant en compte les signaux du premier capteur de vitesse de rotation (36) et les démultiplications réglables dans la boîte de vitesses en charge (14) et comparées avec les vitesses de rotation détectées par le capteur de vitesse de rotation (38) afin de déterminer, pour chaque démultiplication, les écarts de vitesses de rotation appropriées, notamment les différences de vitesses de rotation ou les quotients de vitesses de rotation.

13. Procédé de contrôle selon la revendication 11 ou 12, **caractérisée en ce que** les signaux des capteurs de vitesses de rotation (36, 38) sont analysés et les démultiplications théoriques de la boîte de vitesses en charge (14) sont calculés en permanence, pour lesquelles des vitesses de rotation identiques seraient obtenues des deux côtés de l'embrayage de manoeuvre (18), et **en ce que**, pour la boîte de vitesses en charge (14) un rapport est sélectionné, dont la démultiplication est la plus proche possible de la démultiplication théorique.

14. Procédé selon l'une des revendications 11 à 13, **caractérisé en ce que** l'enclenchement de la boîte de vitesses en charge (14) est réalisé décrivant une hystérésis.

15. Procédé selon l'une des revendications 11 à 14, **caractérisée en ce que** le rapport réglé dans la boîte de vitesses synchrone (22) est déterminé à l'aide d'un dispositif de détection de rapport et **en ce qu'**un enclenchement de la boîte de vitesses en charge (14) n'est effectué que si, après le débrayage, un changement de rapport de la boîte de vitesses synchrone (22) a été détecté.

16. Procédé selon l'une des revendications 11 à 15, **caractérisé en ce que** les vitesses de rotation des deux côtés de la boîte de vitesses synchrone (22) sont déterminés et qu'un quotient de ces vitesses de rotation est effectué et **en ce que** ce quotient est comparé avec des valeurs enregistrées des démultiplications réglables dans la boîte de vitesses synchrone (22), afin de détecter un changement de rapport.

17. Procédé selon l'une des revendications 11 à 16, **caractérisé en ce que**, en cas de besoin, des signaux d'enclenchement peuvent être émis manuellement grâce à un dispositif d'actionnement (28, 30) vers le dispositif de réglage (12) de la boîte de vitesses en charge (14) et **en ce que** l'unité de contrôle (42), lors de l'actionnement du dispositif d'actionnement (28, 30) ignore ou inhibe un réglage automatique de la boîte de vitesses en charge (14).

18. Procédé selon Tune des revendications 11 à 17, **caractérisé en ce que**, pour la production d'impulsions d'enclenchement pour le passage manuel à un rapport supérieur ou le passage manuel à un rapport inférieur de la boîte de vitesses en charge (14), un premier ou un deuxième bouton-poussoir (28, 30) est pressé et **en ce qu'**à chaque impulsion d'enclenchement du bouton-poussoir (28, 30), un rapport supérieur respectivement inférieur est enclenché dans la boîte de vitesses en charge (14).
